# EUROPÄISCHE PATENTSCHRIFT

(11) **EP 2 219 943 B1**
(45) Veröffentlichungstag und Bekanntmachung des Hinweises auf die Patenterteilung: **15.08.2012**
(21) Anmeldenummer: 08858825.6
(22) Anmeldetag: 15.12.2008
(51) Int. Cl.: B64C 33/00

(54) **MUSKELKRAFTGETRIEBENES SCHLAGFLÜGEL-FLUGGERÄT**
MUSCLE-POWERED ORNITHOPTER
AÉRONEF À AILES BATTANTES MÛ PAR LA FORCE DES MUSCLES

(30) Priorität: 13.12.2007 DE 102007060176
(43) Veröffentlichungstag der Anmeldung: 25.08.2010
(73) Patentinhaber: Pietrek, Nikolaus, 14612 Falkensee (DE)
(72) Erfinder: Pietrek, Nikolaus, 14612 Falkensee (DE)
(74) Vertreter: Schmidt, Steffen
(86) Internationale Anmeldenummer: PCT/EP2008/010651
(87) Internationale Veröffentlichungsnummer: WO 2009/074349

(56) Entgegenhaltungen:
- WO-A1-2005/039975
- AT-B- 102 017
- CH-A- 348 326
- DE-A1- 3 731 210
- DE-C- 568 062
- FR-A- 2 797 844

## Beschreibung

Die Erfindung betrifft ein Schlagflügel-Fluggerät, auch Ornithopter genannt, insbesondere ein Schlagflügel-Fluggerät, welches mit Muskelkraft betrieben wird.

Aus dem Stand der Technik sind mehrere Konzepte bekannt, motorisierte und nichtmotorisierte Fluggeräte mit Schlagflügeln zur Verfügung zu stellen.

Es konnte bisher jedoch nur über wenig erfolgreiche Versuche berichtet werden. Im Jahre 1942 gelang es Adalbert Schmid mit einem motorgetriebenen Gerät abzuheben und kurz zu fliegen. Im Jahre 2006 flog ein motorgetriebener Ornithopter von Prof. James De Laurier ca. 300 Meter weit. Er wurde zusätzlich durch eine Schubturbine beschleunigt. Beide Geräte verfügten als Gemeinsamkeit über je ein Paar starr angebrachte Zusatzflügel, die bei anliegender Strömung ständig Auftrieb erzeugten, und über ein Paar schlagender für die Beschleunigung sorgender Flügel.

Wie erfolgreich der Flug eines Schlagflüglers von Emil Hartmann im Jahre 1960 war, ist schwer zu beurteilen, da er von einem Gummiband beschleunigt wurde, um den Flug zu starten und später durch ein Paar schlagender Flügel fortzufahren. Die für das Schlagen der Flügel benötigte Energie wurde mittels Hebeln und Umlenkungen über die Arme des Piloten zur Verfügung gestellt.

Die Muskelkraft, die ein Pilot allein durch die Arme aufbringen kann, um die Schlagflügel zu betätigen, ist vermutlich nicht ausreichend, um einen anhaltenden Flug erfolgreich durch die Schlagbewegung eines Vogelflugs nachahmen zu können. Andere Fluggeräte aus dem Stand der Technik sehen daher auch eine Beinbewegung des Piloten zum Antrieb der Schlagflügel vor. Eine ausgefeilte Technik zum Umlenken der Beinbewegung in eine Schlagflügelbewegung ist beispielsweise in der Patentschrift DE 35 37 365 C2 beschrieben.

Andere Vorschläge von durch Muskelkraft getriebene Ornithopter, wie in der DE 19 50 970 074 A 1 und DE 29 09 975 A1, sehen eine Krafteinbringung mittels Massenbeschleunigung des Körpers des Piloten vor. Diese Konzepte vernachlässigen jedoch den komplizierten Bewegungsablauf, der zur erfolgreichen Nachahmung des Vogelflugs notwendig ist. Ferner vernachlässigen die Konzepte die wichtige Rolle der Stellung des Höhenleitwerks in den verschiedenen Phasen des Schlagens der Hauptflügel.

Die letztgenannten Druckschriften offenbaren starre, in zwei Ebenen gerade Flügel, die aufgrund ihrer Anbringung an einer Drehachse nur eine zweidimensionale Schlagbewegung vollführen können. Demgegenüber führen die Flügel von Vögeln eine Art Ruderbewegung durch und verändern während des Bewegungsablaufs in Teilbereichen des Flügels deren Profil.

Der Schwingenflug des Vogels wird erst durch den Bewegungsablauf zwischen Hand- und Armschwinge des Vogels ermöglicht. Bei der Auf- und Abbewegung der Flügel führt der Flügel im Außenbereich, beim Vogel entspricht das der Handschwinge, eine Ruderbewegung durch, während der rumpfnahe Flügelabschnitt, beim Vogel entspricht das der Armschwinge, annähernd den gleichen Anstellwinkel beibehält. In der Phase der Flügelaufbewegung stellt der Vogel die Handschwinge so ein, dass sie einen höheren Auftrieb erzeugt. In der Phase der Flügelabbewegung ist die Handschwinge hingegen negativ eingestellt, so dass sie nur einen geringeren Auftrieb oder gar keinen Auftrieb erzeugt. Auf diese Weise kann die Handschwinge für den notwendigen Vortrieb sorgen, während die Armschwinge für einen konstanten Auftrieb sorgt.

WO 2005/039975 offenbart ein mit Muskelkraft betriebenes Schlagflügelgerät, welches den Rückstoss eines elastischen Körpers ausnutzt. Bei dem Schlagflügelgerät bewegt der Pilot mit Armen und Beinen die Schlagflügel gegenüber einer Längsstange, die auch als Leitwerkträger dient. Als Rückstellkraft wird die Elastizität eines Teils des Flügels ausgenutzt.

Die Aufgabe der vorliegenden Erfindung ist es, ein Schlagflügel-Fluggerät zur Nachahmung des Vogelflugs bereitzustellen, welches in effizienterer Weise auf die Biomechanik des menschlichen Körpers Rücksicht nimmt, um einen Antrieb durch Muskelkraft zu ermöglichen.

Gelöst wird die Aufgabe durch ein Schlagflügel-Fluggerät nach Anspruch 1 bzw. durch ein Verfahren zum Betreiben des Schlagflügel-Fluggerätes nach Anspruch 13.

Die Erfindung sieht ein mit Muskelkraft betriebenes Schlagflügel-Fluggerät vor, das einen Rumpf, ein Paar Schlagflügel, welche in einem von dem Rumpf beabstandeten Flügelaußenbereich ein veränderbares Profil oder ein Ruder aufweisen, das eine Veränderung des Auftriebs bei vorgegebener Strömung ermöglicht, und ein Höhenleitwerk mit veränderbarem Höhenruderausschlag umfaßt, wobei das Schlagflügelpaar und der Rumpf aus einem elastischen Material gebildet sind, mit einer Elastizität, welche eine Schlagbewegung des Flügelpaares ermöglicht, wobei die Schlagflügel in einer Ruhestellung nach unten gekrümmt sind und die Elastizität derart bemessen ist, dass die Schlagflügel im Flug durch das Gewicht des Piloten in eine neutrale Stellung gezwungen werden, wobei der Rumpf dazu eingerichtet ist, den Piloten in einer aufrechten Stellung gegenüber der Rumpflängsachse aufzunehmen, so dass der Pilot durch Strecken und Anziehen der Beine das Fluggerät phasenweise be- und entlasten kann, wobei das Schlagflügel-Fluggerät ferner mechanische Einrichtungen aufweist, welche eine Betätigung des veränderlichen Flügelaußenbereichs und des veränderlichen Höhenruderausschlags phasenweise zur Schlagflügelbewegung ermöglicht.

Das Fluggerät der vorliegenden Erfindung ermöglicht die Nachahmung des Vogelflugs durch die veränderlichen Flügelaußenbereiche bzw. die Ruder und den veränderlichen Höhenruderausschlag. Darüber hinaus wird die Kraftübertragung zur Erzeugung der Schlagflügelbewegung durch das erfindungsgemäße Fluggerät in vorteilhafter Weise unterstützt. Das Fluggerät sieht insbesondere keine, wie im Stand der Technik üblich, mechanische Gelenke vor, um die Schlagflügelbewegung auszuführen. Stattdessen sind die Schlagflügel mit dem Rumpf fest verbunden, wobei allein durch die Elastizität die Schlagflügelbewegung ermöglicht wird. Durch den im Flug an den Schlagflügeln erzeugten Auftrieb einerseits und das Gewicht des Piloten andererseits werden die Schlagflügel in eine neutrale Stellung, d.h. näher in Richtung zu einer etwa gradlinigen Erstreckung, gezwungen. Dazu ist der Rumpf dazu eingerichtet, den Piloten in einer aufrechten Stellung aufzunehmen, die es ihm ermöglicht, durch Strecken und Anziehen der Beine das Fluggerät zu be- und entlasten. In dem Flug hat es zur Folge, dass beim Belasten des Fluggerätes die Schlagflügel sich nach oben biegen, während beim Entlasten des Fluggerätes ein Flügelausschlag nach unten stattfindet. Zur Nachahmung des Vogelflugs sind ferner die veränderbaren Flügelaußenbereiche und der veränderbare Höhenruderausschlag von Bedeutung. Die veränderliche Rudereinstellung kann entweder mechanisch durch den Piloten betätigt werden oder der Ruderausschlag kann in Abhängigkeit von der Stellung der Schlagflügel automatisch, z.B. eine entsprechende mechanische Kopplung, erzeugt werden.

Gemäß einer bevorzugten Ausführungsform weist das Fluggerät einen flexiblen inneren Rahmen auf, der den Piloten an wenigstens zwei Seiten umgibt und an welchem die Schlagflügel montiert sind. Der Rahmen kann auch in einem flexiblen Monocoque integriert sein. Der Rahmen kann auch eine nichttragende Verkleidung aufweisen, um die Aerodynamik im Bereich des Rumpfes zu verbessern.

Vorzugsweise ist der Rahmen quer zur Längsachse des Fluggeräts elastisch verformbar. Die Verformbarkeit des Rahmens quer zur Längsachse ermöglicht in dieser Ausführungsform die Ruderbewegung und unterstützt die Schlagflügelbewegung.

Gemäß einer Ausführungsform sind sowohl der Rumpf als auch die Flügel wenigstens teilweise aus einem flexiblen Monocoque gebildet.

Die veränderbaren Flügelaußenbereiche sind gemäß einer Ausführungsform durch jeweils wenigstens ein Ruder im Bereich der Flügelendkante gebildet. Alternativ kann auch der gesamte Flügelaußenbereich in der Art eines Pendelruders bewegt werden. Gemäß einer weiteren Ausführungsform kann im Bereich der veränderbaren Flügelaußenbereiche auch das Profil verändert werden. Beispielsweise ist der Flügel in diesem Bereich flexibel ausgeführt und eine mechanische Einrichtung ist vorgesehen, um die Flügelnase gegenüber der Flügelendkante zu bewegen, wodurch sich in diesem Bereich der Einstellwinkel des Flügels ändert.

Gemäß einer Ausführungsform weist das Fluggerät mehrere parallele Holme auf, um die Schlagflügel zu bilden. Die Holme sind fest mit dem Rumpf verbunden. Sie ermöglichen durch unterschiedliche Materialwahl oder Materialstärken die gewünschte Elastizität konstruktiv herzustellen.

Die veränderbaren Flügelaußenbereiche und/oder der Höhenruderanschlag kann durch Steuerstangen und/oder Seilzüge vom Piloten manuell betätigt werden. Alternativ kann die Steuerung der Flügelaußenbereiche und/oder des Höhenruderausschlags auch an die Schlagflügelbewegung gekoppelt sein. In der letzteren Ausführungsform kann zusätzlich eine mechanische Einrichtung vorgesehen sein, die es dem Piloten ermöglicht, der automatisch vorgegeben Bewegung noch eine gewünschte Bewegung zu überlagern, um beispielsweise einen Höhenruderausschlag oder einen Querruderausschlag in konventioneller Weise zu ermöglichen.

Ferner sieht die Erfindung ein Verfahren zum Betreiben des Schlagflügel-Fluggeräts vor. Das Verfahren beruht im wesentlichen darauf, dass der Pilot das Fluggerät phasenweise be- und entlastet. Durch die phasenweise Be- und Entlastung wird die Schlagflügelbewegung induziert.

Gemäß einer Ausführungsform betätigt der Pilot die veränderbaren Flügelaußenbereiche und/oder den Höhenruderausschlag gleichphasig zu dem Be- und Entlasten, z.B. durch eine manuelle Einrichtung. Alternativ oder zusätzlich kann der veränderbare Flügelaußenbereich und/oder der Höhenruderausschlag auch automatisch erfolgen.

Das Entlasten des Fluggerätes kann dabei so erfolgen, dass der Pilot vollständig das Fluggerät mit den Beinen verlässt, so dass sich der Pilot in dieser Flugphase unabhängig von dem Fluggerät als ballistischer Körper bewegt.

Die Steuerung des Fluggeräts kann durch eine horizontale Verlagerung des Körpergewichts erfolgen. Beispielsweise in der Art eines Hängegleiters kann die Steuerung sowohl um die Längsachse als auch die Querachse des Fluggerätes alleine durch Verlagerung des Körpergewichts erfolgen.

Nachfolgend wird im Zusammenhang mit den beigefügten Figuren eine bevorzugte Ausführungsform und exemplarisch ein bevorzugter Flugmodus der Erfindung beschrieben.
- Figur 1: zeigt schematisch den Aufbau eines der Schlagflügel mit verformbaren Flügelspitzen.
- Figur 1a: zeigt zwei Querschnitte durch die verformbaren Flügelspitzen gemäß Figur 1.
- Figur 2: zeigt schematisch in der Vorderansicht die verschiedenen Streckungsgrade eines Hauptflügels beim Spannungsauf- und abbau.

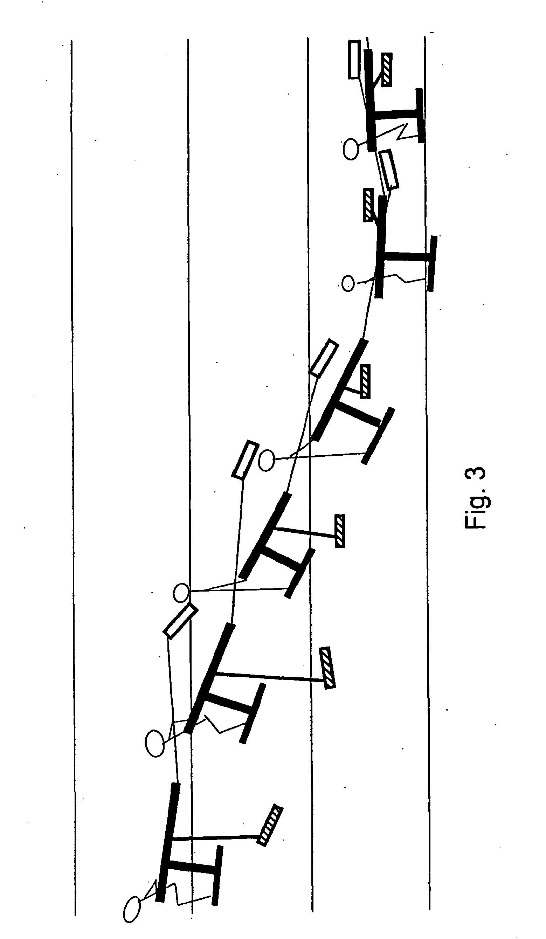

- Figur 3: zeigt exemplarisch in der Seitenansicht das Zusammenspiel der Bewegungen des Piloten, der resultierenden Energieeinbringung, der Nutzung des Höhenruders, sowie der Schlagbewegung der Hauptflügel, wie sie für den Steigflug vorgesehen sind.
- Figur 4: zeigt eine perspektivische Darstellung einer Ausführungsform des Ornithopters ohne Hauptflügelbespannung
- Figur 5A-C: zeigt eine schematische Darstellung des Schlagflügel-Fluggeräts in Ruhestellung, wobei S die Seitenansicht, A die Aufsicht und V die Vorderansicht darstellt
- Figuren 6A-15C: zeigen eine schematische Darstellung des Schlagflügel-Fluggerätes in den unterschiedlichen Flugphasen sowie die Körperhaltung des Piloten, wobei S die Seitenansicht, A die Aufsicht und V die Vorderansicht darstellt.

Die vorliegende Erfindung stellt ein leichtes, tragbares, vom Piloten durch Laufen gegen den Wind zu startendes Fluggerät mit einem elastischen Rahmen und fest damit verbundenen, gekrümmten Flügeln zur Verfügung, die im Flug ohne Umwege direkt mittels Massenbeschleunigung des Körpers des Piloten zum Schlagen angeregt werden, wobei sie konstruktionsbedingt eine den Vögeln beim Fliegen nachempfundene Ruderbewegung vollführen können und in ihrer Form stufenlos verformbar sind. Die Schlagamplitude steht in direkter Abhängigkeit zur Menge der Krafteinbringung des Piloten bei gleicher Schlagfrequenz. Die Flügel des Fluggerätes sind in der Form und Biomechanik als grobe Annäherung den Flügeln der Vögel nachempfunden. Aufgrund der Krümmung und der Profilcharakteristik werden die Flügel im Flug durch das Gewicht des Piloten und durch den erzeugten Auftrieb in eine gestreckte Form gezwungen. Der stehende Pilot verfügt auch über genügend Platz um seinen Körper je nach Bedarf auf einer genügend großen Auflage in alle Richtungen zu positionieren und so den Schwerpunkt des Verbundes Pilot/Ornithopter zu beeinflussen. Zudem kann der Pilot, der seinen Körper über die Beine beschleunigt, jederzeit den Rhythmus und die Menge der Krafteinbringung variieren, oder bei Bedarf kurz innehalten um die Trägheit seines im Verhältnis zum Fluggerät bedeuten schwereren Körpers flugdynamish zu nutzen. Um die Schlaggeschwindigkeit zu beeinflussen, kann der Pilot die Flügelenden mittels Seilzügen oder einem Gestänge in eine mehr oder weniger gewölbte Position bringen und so den an den Flügelenden entstehenden Auftrieb in Abtrieb umwandeln. Es steht jeweils für den Abschlag und für den Aufschlag ein passender Anstellwinkel und/oder eine individuelle Flügelprofilform zur Verfügung. So gelingt dem Piloten eine optimale Abstimmung der Schlagfrequenz, der Schlagamplitude und der Steuerung der Krafteinbringung.

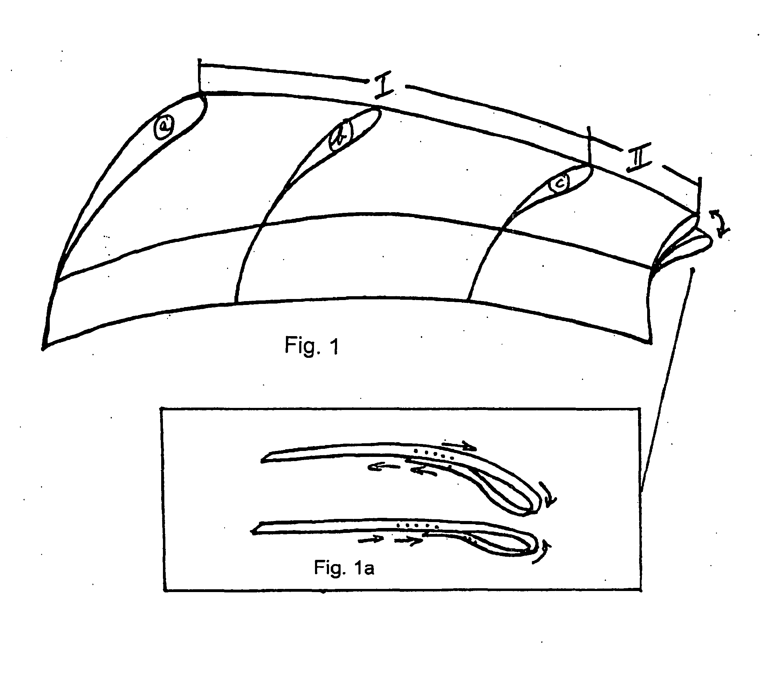

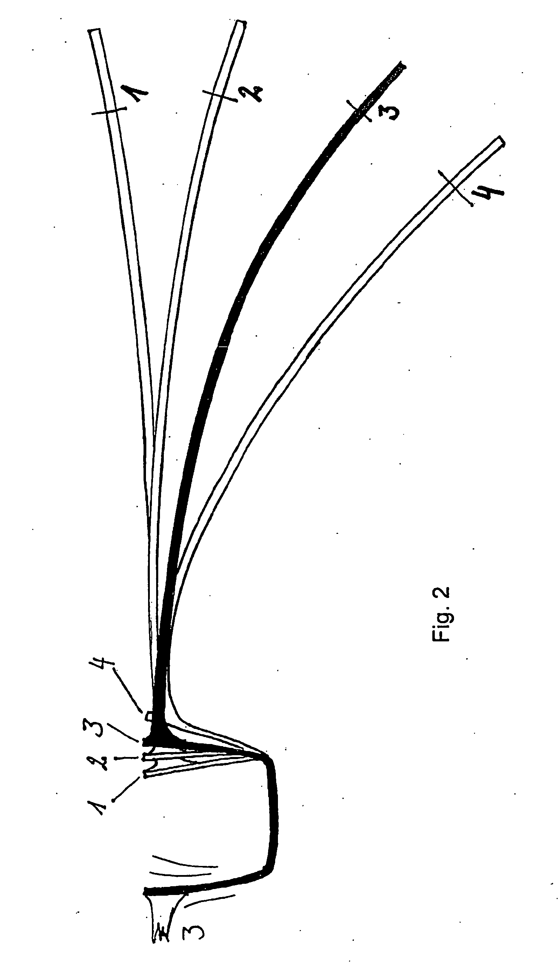

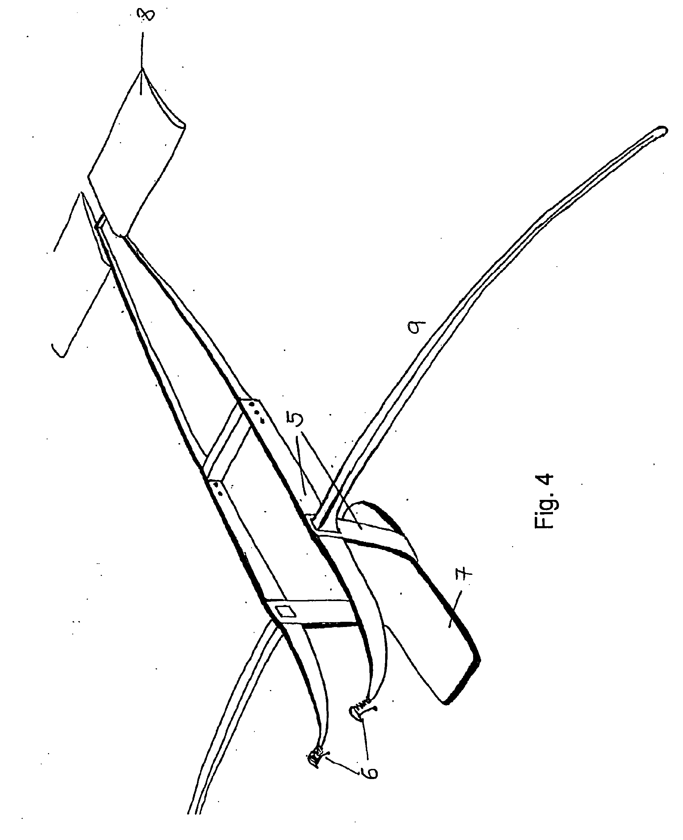

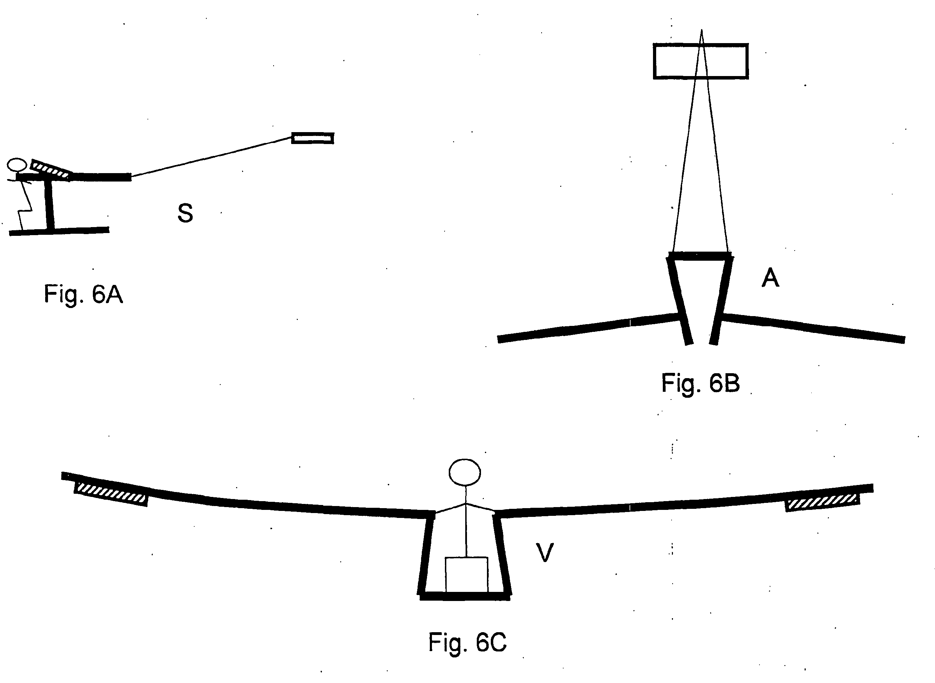

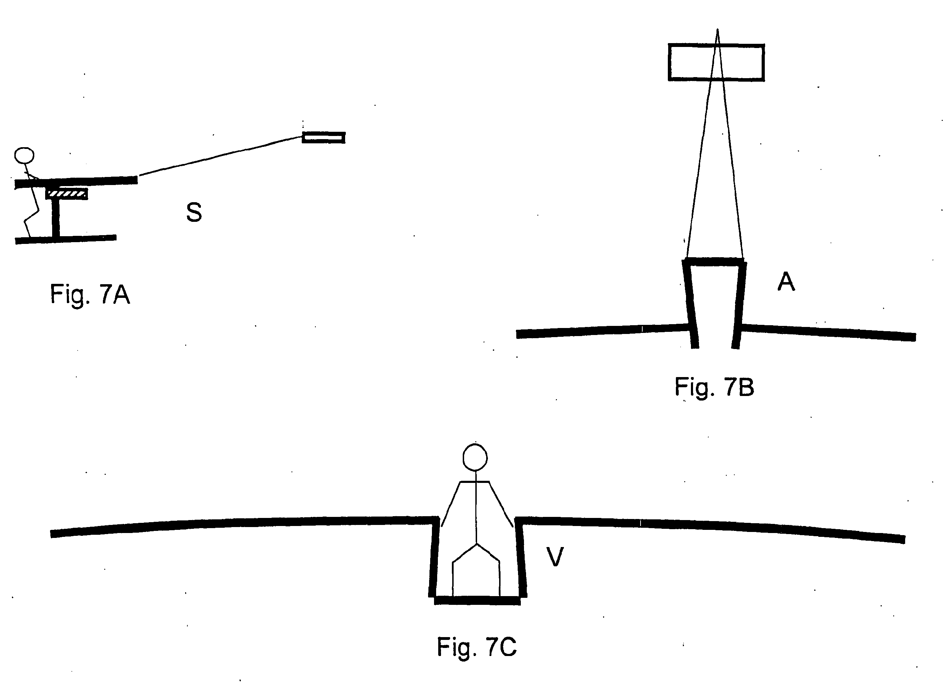

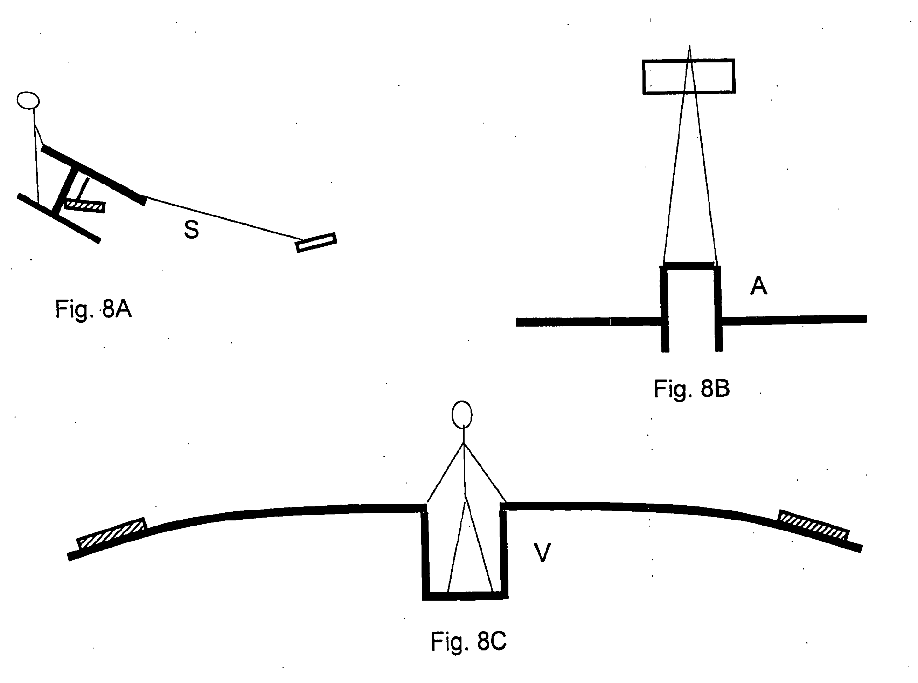

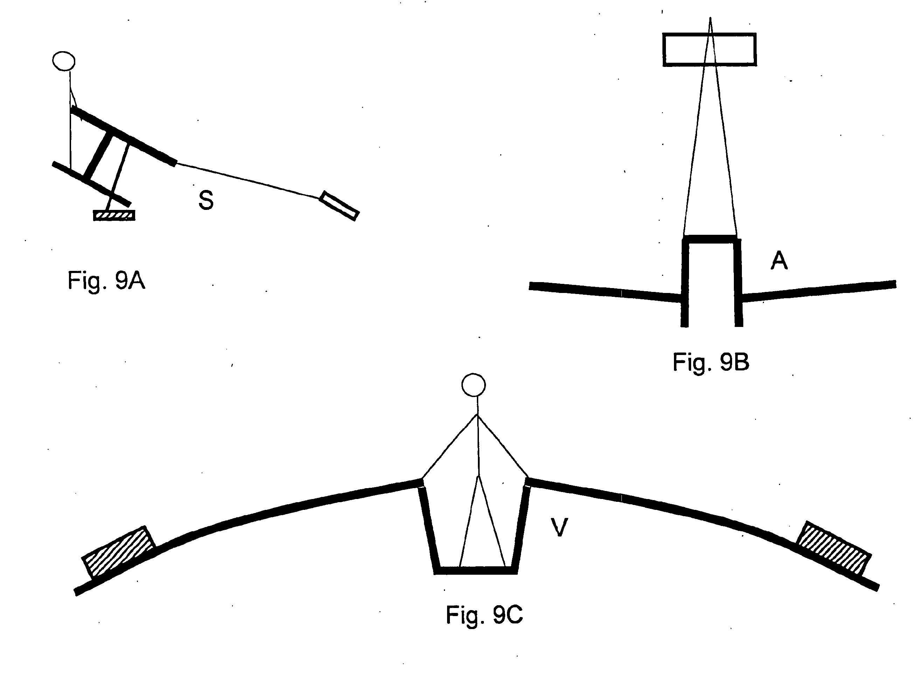

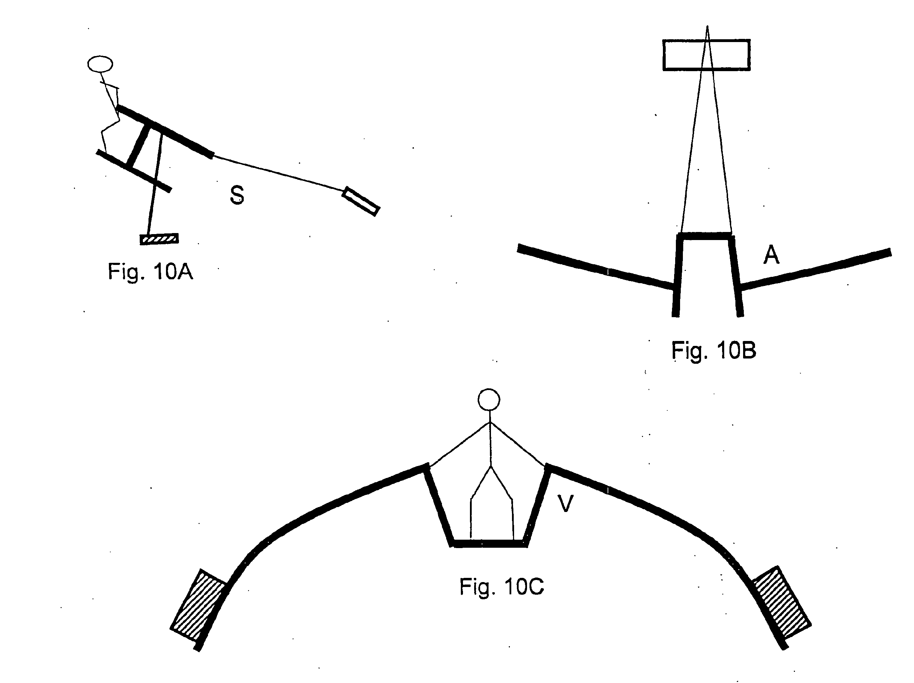

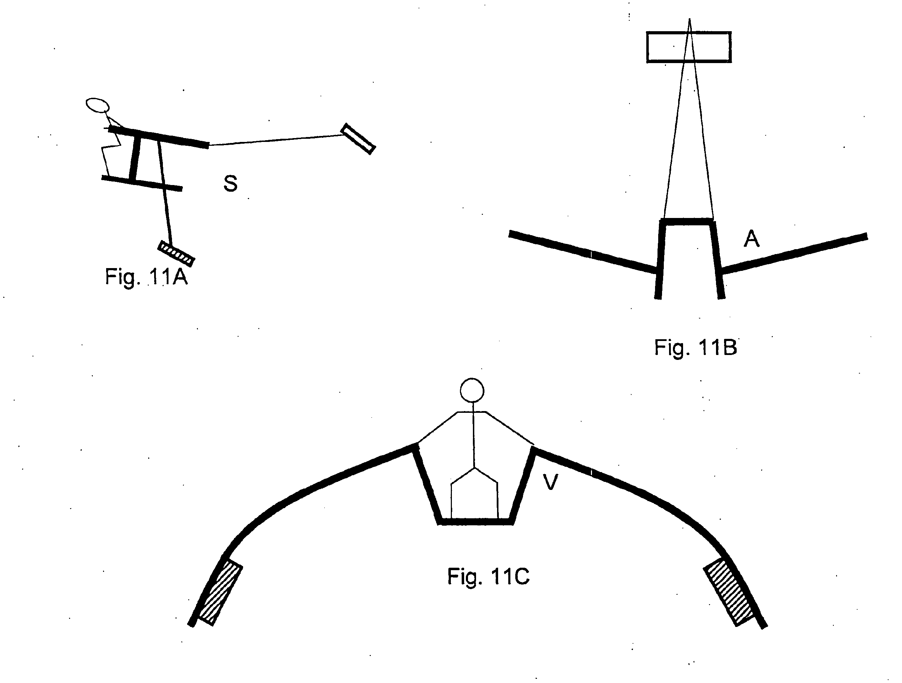

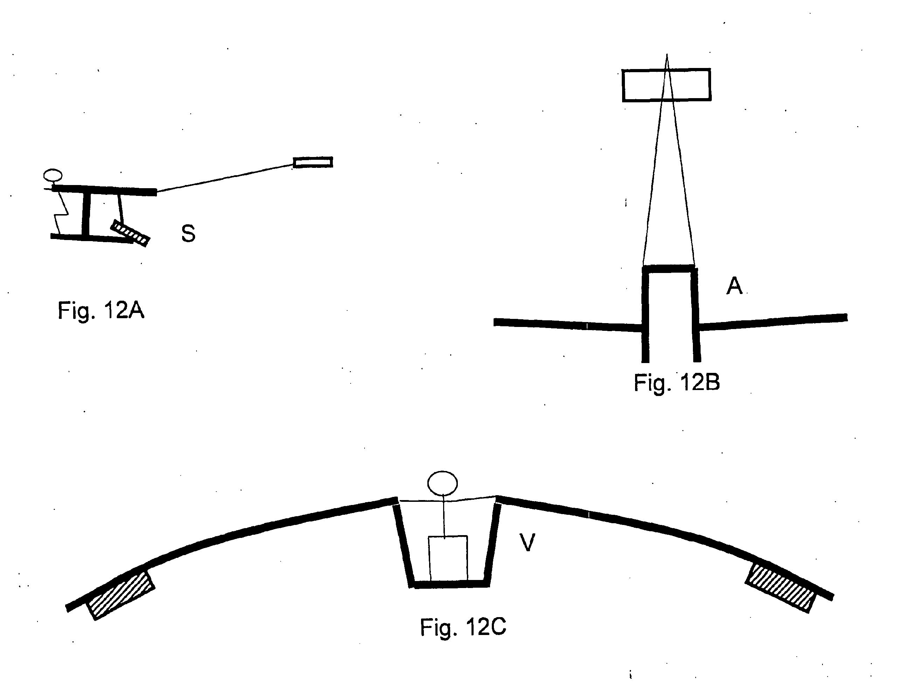

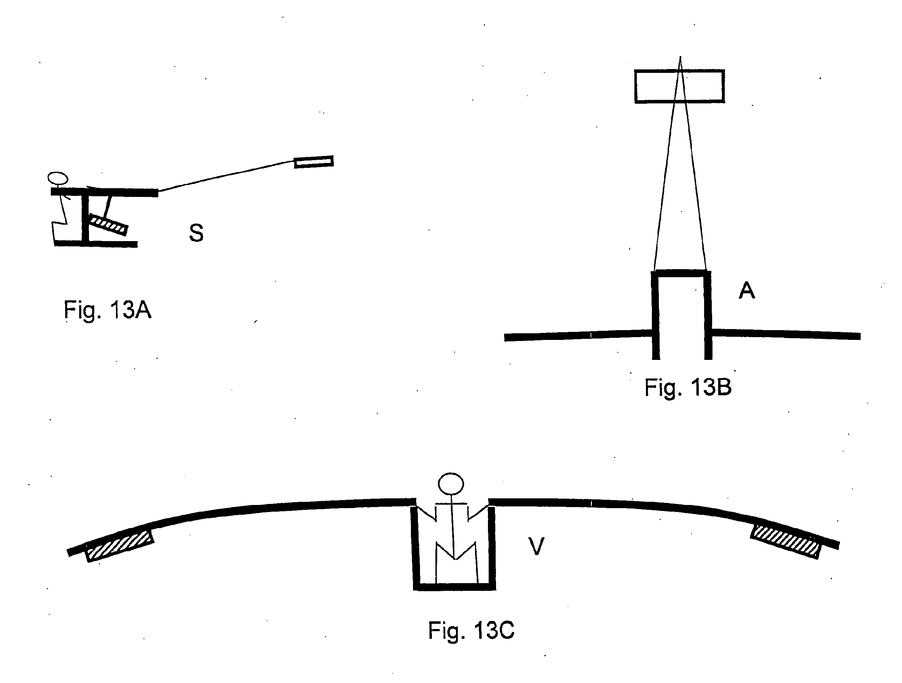

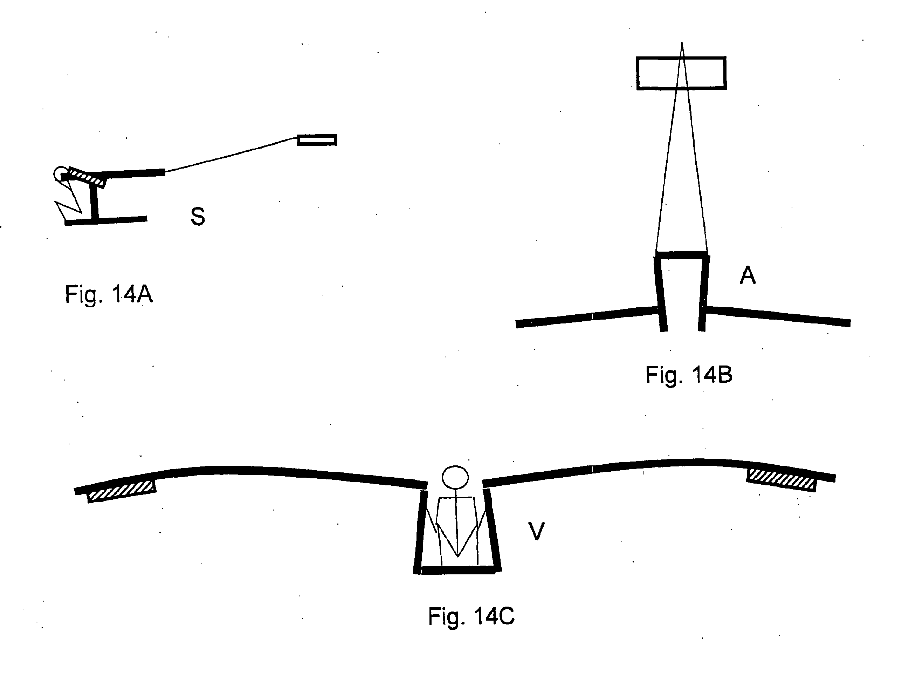

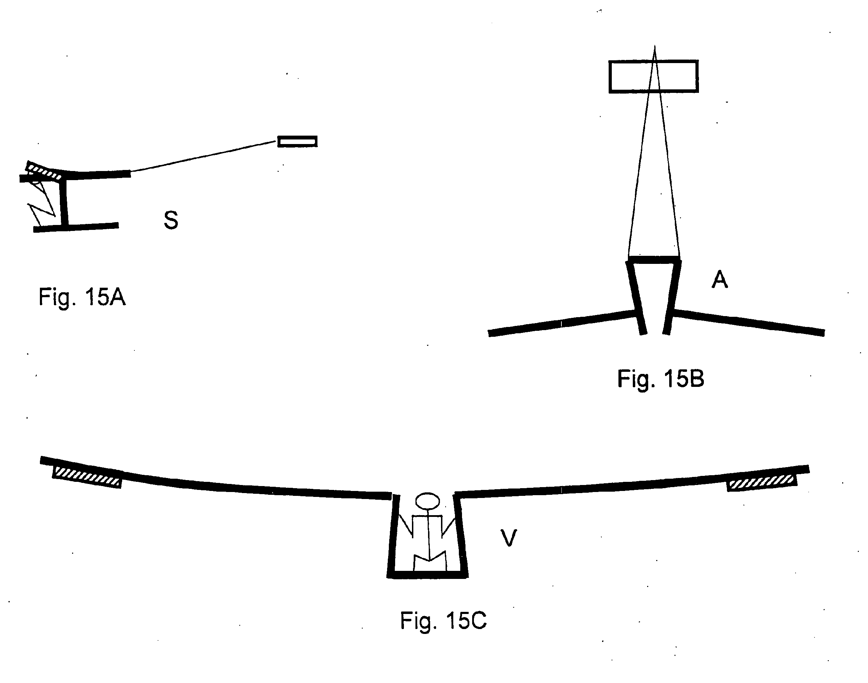

Figur 4 zeigt eine schematische Gesamtdarstellung des Fluggerätes. Das Fluggerät umfaßt einen flexiblen Rumpf 5 in Form eines Rahmens, an dem sich ein Stand 7 für den Piloten nach unten anschließt. In Flugrichtung hinter dem Stand des Piloten ist ein Freiraum vorgesehen, der es dem Piloten ermöglicht, auch hinter dem Stand 7 zu stehen, um das Fluggerät tragen zu können. An dem Rahmen 5 schließen sich ferner in Flugrichtung nach vorne Handgriffe 6 an. Die Handgriffe sind mit mechanischen Einrichtungen versehen, die es ermöglichen, die Ruder des Fluggerätes zu betätigen (in der Figur nicht dargestellt). Seitlich an dem flexiblen Rumpf 5 sind zu beiden Seiten die Schlagflügel angebracht, welche in der Figur 4 nur symbolisch durch einen Holm 9 dargestellt sind. Der Holm 9 ist von einem Profil, wie in der Figur 1 dargestellt, umgeben. Die Verbindung zwischen Rumpf 5 und dem Holm 9 ist starr ausgeführt, während sowohl der Rumpf 5 als auch der Holm 9 eine Flexibilität besitzen, die eine Schlagflügelbewegung ermöglicht. Die Schlagflügelbewegung ist schematisch in Figur 2 dargestellt. Bezugnehmend auf Figur 2 ist in der Position 2 die Flügelstellung dargestellt, wie sie im Gleitflug bei Belastung nur mit dem Gewicht des Piloten eingenommen wird. Demgegenüber zeigt die Stellung 1 einen Ausschlag nach oben. Dieser wird erreicht, wenn das Gewicht des Piloten mit zweifacher Erdbeschleunigung auf den Pilotenstand 7 einwirkt, wie es der Fall ist, wenn der Pilot von dem Pilotenstand 7 nach oben abspringt. Die Stellung 3 zeigt den Flügel in Ruhestellung, d.h. ohne Belastung durch das Pilotengewicht. Die Stellung 4 zeigt den Schlagflügel im maximalen Abschlag nach unten. Der Abschlag kann beispielsweise dadurch erzeugt werden, daß ein Abtrieb am Flügel durch eine Ruderstellung im Flügelau-βenbereicht erzielt wird. Der detaillierte Bewegungsablauf während der Flugphasen wird noch anhand der Figuren 6 bis 15 erläutert.

Wieder bezugnehmend auf die Figur 4 schließt sich in Flugrichtung im rückwärtigen Teil des Rahmens 5 ein Leitwerksträger an, an dem ein Höhenruder 8 befestigt ist. Dieses Höhenruder 8 kann durch eine mechanische Einrichtung (in der Figur nicht gezeigt) verstellt werden.

Die Funktionsweise des erfindungsgemäßen Schlagflügel-Fluggerätes basiert darauf, den Bewegungsablauf des Vogelfluges weitestgehend zu replizieren und dem Fluggerät das Gewicht des Piloten phasenweise, vorzugsweise beim Flügelabschlag, zu entziehen. Es ist vorgesehen, dass der Pilot beim Start das Fluggerät trägt, er gegen den Wind anläuft und von hinten auf den dort offenen Rumpf aufspringt. Beim Absprung sollte er sich an einem erhöhten Platz befinden und weit nach vorne abspringen um möglichst wenig Fahrt zu verlieren. Die folgende Krafteinbringung für den Flügelschlag erfolgt unmittelbar und ohne Verluste direkt in den mit den Flügelwurzeln verbundenem Rahmen, wobei sich der Pilot wiederholt und rhythmisch streckt und auf dem Ornithopter aufspringt. Der Zeitpunkt der maximalen Körperbeschleunigung muss hier beim Sprung so gewählt werden, dass sie bei größtmöglicher Streckung der Flügel erfolgt, da der Flügel in dieser Form den maximalen Auftrieb erzeugt und somit das maximale Widerlager gegen die Körperbeschleunigung bietet. Auch sollte sich der Ornithopter in diesem Moment in einem leichten Sink/Gleitflug befinden, damit ein Teil der eingebrachten Energie in Geschwindigkeit umgesetzt werden kann. Der Pilot springt nach vorne ab. Kurz vor der Vollendung des Sprungs lässt seine Beschleunigung nach. Nach der Überbrückung eines Gleichgewichtspunktes zwischen eingebrachter und gespeicherter Energie werden die Holme und der Rumpf des Ornithopters damit beginnen ihre gespeicherte Spannungsenergie abzugeben. Bei Vollendung des Sprungs lastet das Gewicht des Piloten nicht auf dem Fluggerät und er befände sich in einer ballistischen Flugbahn nach oben und vorne weg vom Fluggerät, wenn er den Ornithopter nicht mittels des Höhenleitwerks in einen Steigflug parallel zu seiner Flugbahn bringen würde. In Ermangelung des hinderlichen Gewichts des Piloten kann der Ornithopter nun die gesamte sich nun entladende Energie für seinen Steigflug und zur Beschleunigung nutzen. Mit der Zeit flacht die Flugbahn des Piloten ab und er muss die Beine anziehen, um dem anhaltenden Steigflug des Ornithopters nicht hinderlich zu sein und um sich auf den nächsten Sprung vorzubereiten. So werden alternierend erst der Pilot und und dann der Ornithopter an Höhe und Fahrt gewinnen. Im Verlauf des Aufund Abschlags der Flügel kann der Pilot diese Bewegung wie oben beschrieben mittels der verstellbaren Flügelenden unterstützen.

Eine schematische Darstellung des Flügels mit einem starren Profil im rumpfnahen Bereich und einem veränderlichen Profil im Flügelaußenbereich ist in der Figur 1 dargestellt. Der rumpfnahe Flügelbereich weist eine Schränkung auf, ist jedoch starr ausgebildet. Durch die unterschiedliche Profilgebung mit zunehmender Entfernung (a, b, c) vom Rumpf wird weniger Auftrieb erzeugt. Der Flügelaußenbereich II ist verforrnbar und dient zur Steuerung des Flügelschlags. In der dargestellten Ausführungsform lässt sich das Profil verändern. Gemäß der alternativen Ausführungsform kann auch ein Ruder im Bereich der Flügelendkante für den gleichen Zweck vorgesehen sein. Eine Querschnittsansicht des Flügelaußenbereichs II ist in der Figur 1 a gezeigt. In der Figur ist der Mechanismus gezeigt, wie sich das Flügelprofil verstellen läßt. Der Nasenbereich des Flügels ist aus einem flexiblen Material gebildet, welches an der Flügelunterseite in Längsrichtung der Flugbahn verlagert werden kann. Durch Verschieben der Flügeloberschale gegenüber der Flügelunterschale läßt sich der Nasenbereich des Flügels in der Höhe verändern.

Für die Phase des Flügelabschlags entzieht der Pilot dem Fluggerät kurzzeitig sein Körpergewicht, indem er vorher nach oben springt. Gleichzeitig betätigt er das Höhenruder und zwingt das Fluggerät in den Steigflug. Der Körper des Piloten folgt dem Fluggerät nach dem Abspringen über eine kurze Zeit hin ballistisch. Danach belastet der Pilot das Fluggerät. Sein Körpergewicht wird durch den vom Fluggerät erzeugten Auftrieb getragen. In dieser Phase zieht der Pilot die Beine an, um dem anhaltenden Steigflug des Ornithopters nicht hinderlich zu sein und um sich für den nächsten Absprung wieder vorzubereiten. Nachfolgend wird anhand der Figuren 6A bis 15C erläutert, wie durch die Bewegung des Piloten die Energie auf das Fluggerät übertragen wird.

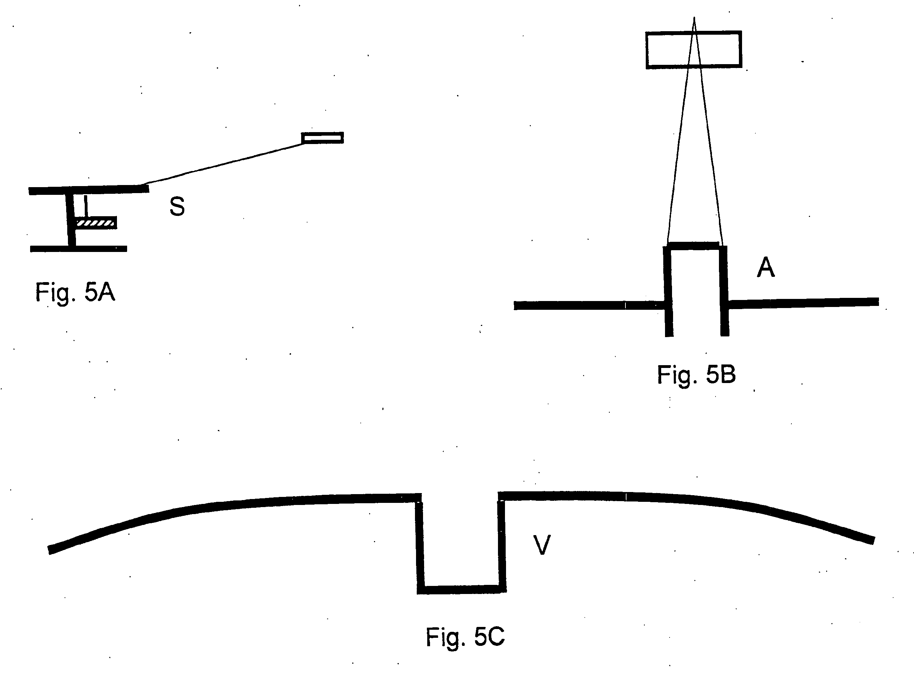

Figuren 5A-C zeigen jeweils die Seiten-, Auf- und Vorderansicht des Fluggerätes in Ruhestellung.

Vorderansicht V: Die Flügel sind nach unten gebogen und tendieren bei zunehmendem Gegenwind aufgrund der oben beschriebenen Konfiguration dazu, sich zu strecken und automatisch Spannung in den Holmen aufzubauen.

Seitenansicht S: Das Höhenruder steht in Neutralstellung wie beim Segelflug. Auch die Flügelspitzen sind in Neutralstellung.

Aufsicht A: Beide seitlichen Flügelholme weisen eine leicht negative Pfeilung auf, die im Flug bei zunehmendem Gegenwind durch den Luftwiderstand und durch die Spannung im Rumpf neutralisiert wird.

Figuren 6A - 15C veranschaulichen exemplarisch die Flugtechnik des Steigflugs schrittweise unter Einsatz des Höhenruders und von Rudern an den Flügelspitzen. Die Beschreibung bezieht sich jeweils in der Abfolge auf die (V) Vorder-, (S) Seiten- und (A) Aufsicht und beginnt mitten im Flug bei maximaler Körperbeschleunigung und maximaler Spannung an Holmen und Rahmen.

Figuren 6A-C:
V) Hier befindet sich der Pilot in der Phase der maximalen Massenbeschleunigung seines Körpers. Der Cockpitrahmen befindet sich unter maximaler positiver Spannung. Die Flügel befinden sich unter maximaler positiver Spannung und Streckung, bieten so maximalen Widerstand gegen das eingesetzte beschleunigte Körpergewicht und ermöglichen so dem Fluggerät seine Rolle als Widerlager gegen die Körperbeschleunigung am effizientesten zu erfüllen. So kann die eingebrachte Energie teils in eine einsetzende Aufwärtsbewegung des Körpers des Piloten und in die Beschleunigung des sich im leichten Sinkflug befindenden Fluggerätes umgesetzt werden. Voraussetzung hierfür ist, dass die Flügel dabei nicht überstrecken.
S) Die Flugrichtung des Fluggerätes zeigt leicht nach unten. Die durch die Körperbeschleunigung eingebrachte Energie kann so sehr effizient in Vortrieb umgesetzt werden. Das Höhenruder befindet sich in Neutralstellung. Die Ruder an den Flügelspitzen erzeugen etwas Auftrieb um die Flügelstreckung zu unterstützen und werden in der Folge in Neutralstellung gebracht um den Luftwiderstand zu minimieren.
A) Auch in der Aufsicht befindet sich der Rahmen in maximaler positiver Spannung. Die so entstandene negative Pfeilung der Flügelholme ist eine Bewegungskomponente des bereits erwähnten Ruderflugs. Die Flügel "holen aus".

Figuren 7A-C:
V) Die Körperbeschleunigung des Piloten lässt nach und das auf den Flügeln lastende Gewicht nimmt somit ab. Aufgrund dieser Abnahme der Last können die Flügelholme nun die Spannung entladen und diese Energie besonders im Bereich c in Beschleunigung umwandeln. Auch der Cockpitrahmen gibt unterstützend Spannung an die Flügelholme ab. Die Ruder an den Flügelspitzen sind in Neutralstellung um den Luftwiderstand in diesem Bereich zu minimieren.
S) Die Flugrichtung des Fluggerätes zeigt leicht nach unten und geht in der Folge gegen waagerecht. Der Pilot stellt in dieser Phase das Höhenruder an um den nun folgenden Steigflug zu initialisieren. Die Ruder an den Flügelspitzen befinden sich in Neutralstellung um den Luftwiderstand in diesem Bereich zu minimieren.
A) Die Flügelenden bewegen sich der Ruderbewegung folgend nach hinten und unten. Der Rumpf gibt dabei weiter unterstützend Spannung an den Rumpf ab.

Figuren 8A-C:
V) Die Körperbeschleunigung des Piloten gegen das Fluggerät nimmt weiter ab. Er gibt keine Energie mehr an das Fluggerät ab und befindet sich in einer ballistischen Flugphase nach oben und vorne. Das Fluggerät befindet sich im Steigflug und folgt ihm. Der Cockpitrahmen beginnt sich zu entspannen. Die Flügelholme geben ihre letzte Spannung ab. Da in dieser Phase das Gewicht des Piloten nicht auf dem Fluggerät lastet, kann diese letzte Energieentladung ganz in Höhengewinn umgesetzt werden. Der Pilot unterstützt den Schwung der Flügel mittels Verstellung des jeweiligen Flügelbereichs II.
S) Pilot und Fluggerät befinden sich in parallelen ballistischen Flugbahnen. Das Höhenruder ist kurzzeitig voll angestellt, bringt das Fluggerät in einen Steigflug. Die Ruder an den Flügelspitzen sind voll angestellt und unterstützen so den Flügelabschlag.
A) Der Cockpitrahmen beginnt sich zu entspannen und die Ruderbewegung wird fortgeführt

Figuren 9A-C:
V) Beide Flügel schwingen weiterhin im Verhältnis zum Rumpf, von den angestellten Flügelbereichen II unterstützt über die Ruhestellung der Holme hinaus nach unten. Dadurch werden beide Flügelenden in einer der Biegung der Flügel folgenden Kurve aufeinander zu gehebelt. Diese Hebelwirkung resultiert zusammen mit dem anhaltenden Steigflug in zusätzlichem Höhengewinn des Ornithopters, da das Gewicht des Piloten dem nicht entgegensteht. In der Folge hält die erwähnte Hebelwirkung an und beginnt dann gegen den Piloten zu wirken, dessen ballistische Flugbahn abflacht. Langsam wird in den Flügelholmen und im Cockpitrahmen negative Spannung aufgebaut.
S) Das Höhenruder zeigt in Flugrichtung. Die Ruder an den Flügelspitzen erzeugen im Verhältnis zum Flügelholm Abtrieb, stehen jedoch durch die Flugbahn des Fluggerätes und der sich vergrößernden Krümmung der Flügel dem Steigflug nicht negativ entgegen. Die ballistischen Flugbahnen des Piloten und des Fluggerätes nähern sich an.
A) Auch hier steigt die negative Spannung im Cockpitrahmen. Die Ruderbewegung wird fortgesetzt.

Figuren 10A-C:
V) Da die Flucht der Flugbahnen des Piloten und des Fluggeräts sich in dieser Phase kreuzen, zieht der Pilot die Beine an um zu vermeiden, dass sein Gewicht dem anhaltenden Steigflug des Fluggerätes und der Hebelwirkung der Flügel zu früh entgegenwirkt. In dieser Phase erreichen die Flügel ihre maximale negative Spannung und der Moment der Hebelwirkung nach oben ist abgeschlossen. Die beim Zurückschwingen der Flügel entstehende gegenteilige Hebelwirkung kann und muß der Pilot am Ende dieser Phase dadurch kompensieren, dass er die Ruder an den Flügelspitzen voll umlenkt, dass der Flugwind in der Folge beide Flügelbereiche II von einander weg drückt und die Flügel erneut in eine Streckung gezwungen werden. Der Cockpitrahmen befindet sich gleichzeitig unter maximaler negativer Spannung, die sich nun folgend entlädt und den Aufschwung der Flügel so unterstützt.
S) Die Flugbahn des Piloten flacht weiterhin ab und er zieht die Beine in Richtung seines Schwerpunkts an um dem anhaltenden Steigflug des Fluggerätes nicht entgegenzuwirken. Am Ende dieser Phase wird der Pilot mit dem Höhenruder das Fluggerät aus dem Steigflug in Richtung einer horizontalen Fluglage bringen.
A) Der Cockpitrahmen hat seine maximale negative Spannung überschritten. Beide Flügelholme haben ihre maximale positive Pfeilung erreicht. Die Ruderbewegung wird fortgesetzt.

Figuren 11A-C:
V) Der Pilot hat die Ruder an den Flügelspitzen derart umgestellt, dass sie die Flügel mit Unterstützung der sich entladenden negativen Spannung zurück in die Streckung zwingen. Dabei unterstützen sie den nunmehr moderaten Steigflug. Der Pilot zieht weiterhin seine Beine an um dem moderaten Steigflug des Fluggerätes nicht hinderlich zu sein.
S) Der Pilot befindet sich nun in einer horizontalen Flugbahn und zieht weiter seine Beine an. So nähern sich Pilot und Fluggerät einander an. Das Höhenruder zwingt das Fluggerät in eine horizontale Flugrichtung.
A) Der Cockpitrahmen hat damit begonnen, seine negative Spannung abzubauen. Er unterstützt so den Aufschlag der Flügel. Die Flügelspitzen bewegen sich im Zuge der Ruderbewegung nun nach vorne und oben.

Figuren 12A-C:
V) Nun haben sich die Flugbahnen des Fluggeräts und des Piloten (In seinem Schwerpunkt) angeglichen und das Gewicht des Piloten beginnt, den Aufschlag der Flügel im Verhältnis zum Rumpf und den Abbau der negativen Spannung der Flügelholme zu unterstützen, die nun im sich langsam aufbauenden Gewicht des Piloten ein Widerlager finden. Der Pilot fährt damit fort, seine Beine anzuziehen, wobei nun das Hauptmotiv ist, sich in eine biomechanisch günstige Ausgangslage für die nächste Massenbeschleunigungsphase zu begeben. Langsam fällt die negative Spannung gegen Null.
S) Das Höhenruder steht in Neutralstellung und hält das Fluggerät bei einer leichten Steigstellung in einem horizontalen Flug. Der Pilot zieht weiter die Beine an. Die Ruder an den Flügelspitzen sind angestellt und zwingen die Flügel in eine gestreckte Position.
A) Der Cockpitrahmen ist entspannt. Die Flügelspitzen befinden sich bald in einer neutralen Position neben dem Piloten.

Figuren 13A-C:
V) Der Cockpitrahmen und die Flügel sind nun entspannt. Das Gewicht des Piloten, der vorhandene Schwung der Holme und die nach wie vor angestellten Ruder an den Flügelspitzen treiben die Flügel in die Streckung. Der Pilot hat die Beine ganz angezogen und wartet auf den Zeitpunkt zum Aufspringen.
S) Das Höhenruder steht in Neutralstellung und hält das Fluggerät bei einer leichten Steigstellung in einem horizontalen Flug. Die projizierte Flugbahn des Piloten zeigt mittlerweile nach unten und wird vom Fluggerät vermieden. Das Fluggerät und der Pilot verlieren Energie. Sie werden langsamer, halten aber ihre Höhe, während die Flügel am Ende dieser Phase damit beginnen, positive Spannung aufzubauen. Die Flügelenden befinden sich nun auch auf Höhe und neben den Hüften des Piloten. Der Pilot beginnt am Ende dieser Phase damit, seinen Körper nach vorne zu verlagern. Durch die so erreichte Verlagerung des gemeinsamen Schwerpunktes erreicht der Pilot, dass das Fluggerät seine Nase senkt, ohne das Höhenruder betätigen zu müssen.
A) Der Cockpitrahmen baut Spannung auf. Die Flügelholme weisen trotz des aerodynamischen Widerstands konstruktionsbedingt eine negative Pfeilung auf.

Figuren 14A-C:
V) Der Cockpitrahmen und die Flügel bauen weiter Spannung auf. Das Gewicht des Piloten, der vorhandene Schwung der Holme und die nach wie vor angestellten Ruder an den Flügelspitzen treiben die Flügel weiterhin in die Streckung. Am Ende dieser Phase beginnt der Pilot durch die Streckung seiner Beine mit der Körperbeschleunigung. Er springt nach vorne und nach oben.
S) Das Fluggerät gewinnt nun langsam an Fahrt, da es sich in einem leichten Sinkflug befindet. Die Flügelbereiche II treiben die Flügel in eine Streckung und befinden sich nun seitlich neben dem Piloten.
A) Der Cockpitrahmen baut positive Spannung auf. Konstruktionsbedingt treibt er die Flügelholme dadurch in eine negativ gepfeilte Stellung

Figuren 15A-C:
V) Der Cockpitrahmen hat nun seine maximale positive Spannung erreicht. Die Flügel haben nun ihre maximale positive Spannung erreicht. Durch ihre lange Streckung und Ihre waagerechte Position weisen sie jetzt die größtmögliche projizierte Fläche auf und dienen so optimal als Widerlager gegen die bereits eingesetzte Körperbeschleunigung des Piloten, der sich in die Höhe wuchtet.
S) Das Höhenruder steht in neutraler Stellung und das Fluggerät befindet sich in einem moderaten Sinkflug. Durch die Energieeinbringung des Piloten gewinnt der Verbund Omithopter/Pilot an Fahrt.
Der Pilot wuchtet sich nach oben und beginnt so mit dem Einbringen von Energie in das System. Die Ruder an den Flügelspitzen sind nach wie vor angestellt und produzieren Auftrieb, um dem Höhenverlust etwas entgegenzuwirken und die positive Spannung des Rahmens und der Flügel weiterhin aufzubauen.
A) Der Cockpitrahmen steht nun unter maximaler positiver Spannung. Die negative Pfeilung ist in dieser Phase am ausgeprägtesten.
Die oben beschriebenen Bewegungsphasen und Abläufe gehen direkt in die zu den Figuren 6 A - C beschriebenen Abläufe über und so fort.

### Bezugszeichenliste:

- 1: Maximaler Aufschlag >2g Belastung
- 2: Gleitflug 1 g Belastung
- 3: Ruhestellung
- 4: Maximaler Abschlag
- 5: Rumpf, insbesondere als Rahmen ausgebildet
- 6: Handgriffe
- 7: Pilotenstand
- 8: Höhenruder
- 9: Holm
- I: Flügelbereich mit festem Profil
- II: Flügelbereich mit veränderbaren Profil

## Patentansprüche

1. Muskelkraftbetriebenes Schlagflügel-Fluggerät, das folgendes umfaßt:
einen Rumpf (5),
ein Paar Schlagflügel, welche in einem vom Rumpf (5) beabstandeten Flügelaußenbereich (II) ein veränderbares Profil oder ein Ruder aufweisen, das Veränderung des Auftriebs bei vorgegebener Strömung ermöglicht, und
ein Höhenleitwerk (8) mit veränderbarem Höhenruderausschlag,
wobei das Schlagflügelpaar aus einem elastischen Material gebildet ist wobei der Rumpf (5) dazu eingerichtet ist, den Piloten in einer aufrechten Stellung gegenüber einer Rumpflängsachse aufzunehmen, so daß der Pilot durch Strecken und Anziehen der Beine das Fluggerät phasenweise be- und entlasten kann,
wobei das Schlagflügel-Fluggerät ferner mechanische Einrichtungen aufweist, welche eine Betätigung der veränderlichen Flügelaußenbereiche (II) und des veränderlichen Höhenruderausschlags phasengleich zur Schlagflügelbewegung ermöglicht,
**dadurch gekennzeichnet, dass** auch der Rumpf aus einem elastischen Material gebildet ist und die Elastizität des Schlagflügelpaares und des Rumpfs (5) eine Schlagbewegung des Schlagflügelpaars bei starrer Verbindung mit dem Rumpf (5) ermöglicht,
wobei die Schlagflügel in einer Ruhestellung (3) nach unten gekrümmt sind und die Elastizität derart bemessen ist, daß die Schlagflügel im Flug durch das Gewicht des Piloten in eine neutrale Stellung (2) gezwungen werden.

2. Schlagflügel-Fluggerät nach Anspruch 1, welches einen flexiblen inneren Rahmen (5) aufweist, der auf wenigstens zwei Seiten den Piloten umgibt und an welchem die Schlagflügel montiert sind.

3. Schlagflügel-Fluggerät nach Anspruch 2, wobei der Rahmen (5) quer zur Längsachse des Fluggeräts elastisch verformbar ist.

4. Schlagflügel-Fluggerät nach einem der vorhergehenden Ansprüche, wobei der Rumpf (5) und die Flügel wenigstens teilweise aus einem flexiblen Monocoque gebildet sind.

5. Schlagflügel-Fluggerät nach einem der vorhergehenden Ansprüche, wobei die veränderbaren Flügelaußenbereiche (II) durch wenigstens ein Ruder im Bereich der Flügelendkante gebildet wird.

6. Schlagflügel-Fluggerät nach einem der vorhergehenden Ansprüche, wobei die Schlagflügel einen oder mehrere parallele Holme aufweisen, die mit dem Rumpf (5) verbunden sind und sich bis wenigstens zu den Flügelaußenbereichen erstrecken.

7. Schlagflügel-Fluggerät nach einem der vorhergehenden Ansprüche, wobei die veränderbaren Flügelaußenbereiche und/oder der Höhenruderausschlag durch Steuerstangen und/oder Seilzüge vom Piloten manuell betätigbar sind.

8. Schlagflügel-Fluggerät nach einem der vorhergehenden Ansprüche, wobei eine Bespannung der Schlagflügel ihre Form beim Bewegen der Außenflügelbereiche (II) ändert.

9. Schlagflügel-Fluggerät nach einem der vorhergehenden Ansprüche, wobei ein Dämpfungselement die Schwingung des Rumpfes dämpft.

10. Schlagflügel-Fluggerät nach Anspruch 9, wobei das Dämpfungselement des Rumpfes regulierbar ist.

11. Schlagflügel-Fluggerät nach einem der vorhergehenden Ansprüche, wobei die Elastizität der Schlagflügel entlang eines oder mehrerer Holme des Flügels sich verändert.

12. Schlagflügel-Fluggerät nach Anspruch 11, wobei die Elastizität des Schlagflügels über einen Teilbereich der Fläche von einem rumpfnäheren Ort (a) zu einem vom Rumpf weiter entfernten Ort (b) zunimmt und/oder über einen weiteren Teilbereich von einem rumpfnäheren Ort (b) zu einem rumpfentfernteren Ort (c) die Elastizität abnimmt.

13. Verfahren zum Betreiben eines Schlagflügel-Fluggerätes nach einem der vorhergehenden Ansprüche, wobei der Pilot durch eine Beinbewegung das Fluggerät phasenweise be- und entlastet.

14. Verfahren nach Anspruch 13, wobei der Pilot den veränderbaren Flügelaußenbereich (II) gleichphasig zu dem Be- und Entlasten betätigt.

15. Verfahren nach Anspruch 13 oder 14, wobei der Pilot phasenweise das Fluggerät vollständig entlastet.

16. Verfahren nach einem der Ansprüche 13 bis 15, wobei der Pilot das Fluggerät durch horizontale Verlagerung seines Körpergewichts um Längs- und Querachse steuert.

## Claims

1. Muscle-powered aircraft that comprises the following:
a fuselage (5),
a pair of flapping wings having an alterable profile or rudder in an outer wing region (II) at a distance from the fuselage (5) enabling alteration of the uplift in a predetermined flow, and
an elevator unit (8) with alterable pitch elevator deflection,
wherein the pair of flapping wings is made of an elastic material wherein the fuselage (5) is configured to accommodate the pilot in an upright position with respect to a longitudinal axis of the fuselage so that the pilot can apply stress to and relieve stress from the aircraft in phases by stretching and drawing in the legs,
the aircraft with flapping wings further having mechanical devices which facilitate an actuation of the alterable outer wing regions (II) and of the alterable pitch elevator deflection in phase with the movement of the flapping wings, **characterized in that** also the fuselage (5) is made of an elastic material and the elasticity of the pair of flapping wings and the fuselage (5) makes possible a flapping motion of the pair of flapping wings, wherein the flapping wings when in a resting position (3) are curved downwards and the elasticity is gauged so that when in flight the flapping wings are forced into a neutral position (2) by the weight of the pilot.

2. Aircraft with flapping wings according to claim 1 having a flexible inner frame (5) that surrounds the pilot on at least two sides and on which the flapping wings are mounted.

3. Aircraft with flapping wings according to claim 2, wherein the frame (5) is elastically deformable transversely to the aircraft's longitudinal axis.

4. Aircraft with flapping wings according to any one of the preceding claims, wherein the fuselage (5) and the wings at least in part are shaped from a flexible monocoque structure.

5. Aircraft with flapping wings according to any one of the preceding claims, wherein the alterable outer wing regions (II) are constituted by at least one rudder in the region of the trailing edge of the wing.

6. Aircraft with flapping wings according to any one of the preceding claims, wherein the flapping wings have one or more parallel spars which are connected with the fuselage (5) and which extend at least to the outer regions of the wings.

7. Aircraft with flapping wings according to any one of the preceding claims, wherein the alterable outer wing regions and/or the pitch elevator deflection can be operated manually by the pilot via control rods and/or cable pulls.

8. Aircraft with flapping wings according to any one of the preceding claims, wherein a covering of the flapping wings alters its shape on moving the outer wing regions (II).

9. Aircraft with flapping wings according to any one of the preceding claims, wherein a dampening element dampens the fuselage vibration.

10. Aircraft with flapping wings according to claim 9, wherein the dampening element for the fuselage is controllable.

11. Aircraft according to any one of the preceding claims, wherein the elasticity of the flapping wings changes along one or more spars of the wing.

12. Aircraft according to claim 11, wherein the elasticity of the flapping wing increases across a portion of the area from a location (a) closer to the fuselage to a location (b) further away from the fuselage and/or the elasticity decreases across a further portion from a location (b) closer to the fuselage to a location (c) further away from the fuselage.

13. Method of operating an aircraft with flapping wings according to anyone of the preceding claims, wherein the pilot applies stress to and relieves stress from the aircraft in phases by a leg movement.

14. Method according to claim 13, wherein the pilot operates the outer wing region (II) in phase with applying and relieving the stress.

15. Method according to one of the claims 13 or 14, wherein the pilot completely relieves the stress from the aircraft in phases.

16. Method according to one of the claims 13 to 15, wherein the pilot steers the aircraft by horizontal displacement of his body weight about a longitudinal and a lateral axis.

## Revendications

1. Aéronef à ailes battantes mû par la force des muscles, qui comprend ce qui suit :
- un fuselage (5),
- une paire d'ailes battantes, comportant un profilé variable ou une rame, dans une zone externe de l'aile (II) située à distance du fuselage (5), qui permet la modification de la poussée pour un courant prédéfini et
- un empennage horizontal (8) avec braquage de profondeur variable,
- sachant que la paire d'ailes battantes est fabriquée dans un matériau élastique, le fuselage (5) étant aménagé de façon à loger le pilote dans une position debout par rapport à un axe longitudinal du fuselage (5) de telle sorte que le pilote puisse charger et décharger progressivement l'aéronef par extension et rétraction des jambes, l'aéronef à ailes battantes comportant en outre des dispositifs mécaniques qui permettent un actionnement des zones externes variables de l'aile (II) et du braquage de profondeur variable en même temps que le mouvement de l'aile battante,
**caractérisé en ce que** le fuselage aussi est fabriqué dans un matériau élastique et l'élasticité de la paire d'ailes battantes et du fuselage (5) permet un mouvement de battement de la paire d'ailes battantes pour une liaison fixe avec le fuselage (5), les ailes battantes étant recourbées vers le bas dans une position de repos (3) et l'élasticité étant choisie de manière à ce que les ailes battantes soient amenées dans une position neutre (2) par contrainte, en vol, du fait du poids du pilote.

2. Aéronef à ailes battantes selon la revendication 1, lequel comporte un châssis interne souple (5) qui entoure le pilote sur au moins deux côtés et sur lequel les ailes battantes sont montées.

3. Aéronef à ailes battantes selon la revendication 2, dans lequel le châssis (5) est élastiquement déformable perpendiculairement à l'axe longitudinal de l'aéronef.

4. Aéronef à ailes battantes selon l'une quelconque des revendications précédentes, le fuselage (5) et les ailes étant fabriqués au moins en partie dans un monocoque souple.

5. Aéronef à ailes battantes selon l'une quelconque des revendications précédentes, dans lequel les zones externes variables de l'aile (II) sont formées d'au moins une rame au niveau de l'arête d'extrémité de l'aile.

6. Aéronef à ailes battantes selon l'une quelconque des revendications précédentes, dans lequel les ailes battantes présentent un ou plusieurs montants parallèles qui sont rattachés au fuselage (5) et s'étendent au moins jusqu'aux zones externes de l'aile.

7. Aéronef à ailes battantes selon l'une quelconque des revendications précédentes, dans lequel les zones externes variables de l'aile et/ou le braquage de profondeur peuvent être activés à la main par le pilote au moyen de barres de commande et/ou de bielles de commande.

8. Aéronef à ailes battantes selon l'une quelconque des revendications précédentes, dans lequel un revêtement des ailes battantes modifie leur forme lors du mouvement des zones externes de l'aile (II).

9. Aéronef à ailes battantes selon l'une quelconque des revendications précédentes, dans lequel un élément amortisseur amortit la vibration du fuselage.

10. Aéronef à ailes battantes selon la revendication 9, dans lequel l'élément amortisseur du fuselage est réglable.

11. Aéronef à ailes battantes selon l'une quelconque des revendications précédentes, dans lequel l'élasticité des ailes battantes change le long d'un ou de plusieurs montants de l'aile.

12. Aéronef à ailes battantes selon la revendication 11, dans lequel l'élasticité de l'aile battante augmente sur zone de la surface, d'un emplacement (a) plus proche du fuselage à un emplacement (b) plus éloigné du fuselage, et/ou sur une autre zone, d'un emplacement (b) plus proche du fuselage à un emplacement (c) plus éloigné du fuselage.

13. Procédé d'actionnement d'un aéronef à ailes battantes selon l'une quelconque des revendications précédentes, dans lequel le pilote charge et décharge progressivement l'aéronef par un mouvement des jambes.

14. Procédé selon la revendication 13, dans lequel le pilote actionne la zone externe variable de l'aile (II) en même temps que le chargement et le déchargement.

15. Procédé selon la revendication 13 ou 14, dans lequel le pilote décharge entièrement l'aéronef.

16. Procédé selon la revendication 13 à 15, dans lequel le pilote commande l'aéronef par le décalage horizontal du poids de son corps autour d'un axe longitudinal et d'un axe transversal.
